# EUROPÄISCHE PATENTSCHRIFT

(11) **EP 3 208 097 B1**
(45) Veröffentlichungstag und Bekanntmachung des Hinweises auf die Patenterteilung: **02.01.2019**
(21) Anmeldenummer: 17000196.0
(22) Anmeldetag: 08.02.2017
(51) Int. Cl.: B41M 5/00, B41J 3/407, B29C 45/16, B41M 7/00

(54) **VERFAHREN UND VORRICHTUNG ZUR HERSTELLUNG EINES BEDRUCKTEN KUNSTSTOFFGEGENSTANDES**
METHOD AND DEVICE FOR PRODUCING A PRINTED PLASTIC OBJECT
PROCÉDÉ ET DISPOSITIF DE FABRICATION D'UN OBJET EN PLASTIQUE IMPRIMÉ

(30) Priorität: 17.02.2016 DE 102016001805
(43) Veröffentlichungstag der Anmeldung: 23.08.2017
(73) Patentinhaber: J.H. Tönnjes GmbH, 27751 Delmenhorst (DE)
(72) Erfinder: Tönjes, Piet, 27751 Delmenhorst (DE)
(74) Vertreter: Möller, Friedrich

(56) Entgegenhaltungen:
- EP-A1- 2 133 188
- WO-A1-01/76847
- WO-A1-03/106134
- WO-A1-2009/003437
- WO-A2-2009/003727
- DE-A1-102008 035 728
- JP-A- H09 314 568
- JP-A- 2012 012 019
- US-A- 6 001 459
- US-A1- 2005 051 920
- US-A1- 2005 200 043
- US-A1- 2006 144 261
- US-A1- 2006 237 868
- US-A1- 2008 274 321
- US-A1- 2009 295 037
- US-A1- 2010 080 970
- US-A1- 2011 272 833
- DATABASE WPI Week 201170 Thomson Scientific, London, GB; AN 2011-L48841 XP002774218, -& KR 2011 0090434 A (HWA S C) 10. August 2011 (2011-08-10)

## Beschreibung

Die Erfindung betrifft ein Verfahren zur Herstellung eines bedruckten Kunststoffgegenstands gemäß dem Oberbegriff des Anspruchs 1 und eine Vorrichtung zur Herstellung eines bedruckten Kunststoffgegenstands gemäß dem Oberbegriff des Anspruchs 8.

Kunststoffgegenstände werden häufig bedruckt. Das erfolgt aus verschiedenen Gründen, beispielsweise um Kunststoffgegenständen ein bestimmtes Design zu verleihen und/oder zu beschriften. Das Bedrucken der Kunststoffgegenstände erfolgt gemäß der US 2006/0237868 A1 nach der Herstellung derselben. Das führt dazu, dass die Bedruckung nur äußerlich auf die Kunststoffgegenstände aufgebracht werden kann. Außerdem müssen die Kunststoffgegenstände zum nachträglichen Bedrucken exakt zur Druckeinrichtung ausgerichtet werden, damit der Druck auf die vorgegebene Stelle des Kunststoffgegenstands aufgebracht wird.

Aus der US 2005/0051920 A1 sind ein Verfahren und eine Vorrichtung bekannt, bei der eine Bedruckung eines gespritzten Kunststoffgegenstands in der Form erfolgt. Die Form weist dazu einen porösen Bereich auf. In diesem porösen Bereich der Form erhält der Gegenstand eine Beschichtung. Bei diesem bekannten Verfahren muss die Form mit mindestens einem porösen Bereich versehen sein.

Die EP 2 133 188 A1 offenbart ein Verfahren und eine Vorrichtung zum Spritzgießen von bedruckten Kunststoffgegenständen. Dabei wird zunächst ein Gegenstand gespritzt, der danach bedruckt wird durch einen sogenannten Transferdruck. Anschließend wird auf diese bedruckte Seite des zuerst gespritzten Teils des herzustellenden Kunststoffgegenstands ein anderer Teil des Kunststoffgegenstands aufgespritzt.

Der Erfindung liegt die Aufgabe zugrunde, ein Verfahren und eine Vorrichtung zur Herstellung eines bedruckten Kunststoffgegenstands zu schaffen, die eine exakte und zuverlässige Bedruckung des Kunststoffgegenstands gewährleisten, insbesondere einen bedruckten Kunststoffgegenstand mit einem hochwertigen Erscheinungsbild schaffen.

Ein Verfahren zur Lösung der eingangs genannten Aufgabe weist die Maßnahmen des Anspruchs 1 auf. Bei diesem Verfahren ist es vorgesehen, die Bedruckung der Trägerschicht durch mindestens einen Digitaldruck vorzunehmen. Dabei wird die Trägerschicht in der Form, worin sie erzeugt, insbesondere gespritzt, worden ist, mit der Bedruckung versehen. In der Form nimmt die hierin hergestellte Trägerschicht eine exakt vorgegebene Position ein. Wenn nun die Trägerschicht in der Form auch bedruckt wird, ist eine zuverlässige, reproduzierbare und exakte Positionierung des Drucks auf der Trägerschicht gewährleistet. Fehldrucke durch außermittige Platzierungen oder Verkantungen sind dadurch nicht mehr möglich.

Durch den Digitaldruck lassen sich hochwertige und auch mehrfarbige Drucke kostengünstig herstellen, und zwar vor allem auch bei geringer Stückzahl. Der Digitaldruck macht eine exakte Positionierung der zu bedruckenden Trägerschicht zum Druckkopf erforderlich. Dies ist gewährleistet, wenn die Trägerschicht noch in der Form mit dem Digitaldruck versehen wird.

Eine bevorzugte Möglichkeit der Bedruckung der Trägerleiste sieht es vor, den Digitaldruck bei geöffneter Form vorzunehmen. Vorzugsweise wird dann der Digitaldruck auf diejenige Seite der sich noch in der geöffneten Form befindenden Trägerleiste aufgebracht, die bei geöffneter Form freiliegt. Die zu bedruckende Seite der Trägerleiste ist dadurch vom Digitaldruckkopf gut zugänglich, auch wenn der Digitaldruck bei sich noch in einer Formhälfte der geöffneten Form befindlichen Trägerschicht erfolgt.

Besonders vorteilhaft kann es sein, wenn die Trägerleiste etwas gegenüber der in der Trennebene der Form liegenden Ebene derjenigen Formhälfte herausragt, in der die gespritzte Trägerschicht zum Bedrucken verbleibt. Da kann der mindestens eine Druckkopf der Digitaleinrichtung bei Bedarf mit der zu bedruckenden freien Seite der Trägerschicht zur Anlage gebracht werden, ohne dass dabei der Druckkopf die vordere Ebene der Form bzw. Formhälfte berührt.

Bei einer besonders vorteilhaften Ausgestaltung des Verfahrens ist es vorgesehen, dass die Trägerleiste zumindest größtenteils in einer Formhälfte der Spritzgussform gespritzt wird. Dadurch wird sichergestellt, dass die gespritzte Trägerleiste nach dem Öffnen der Form in derjenigen Formhälfte bleibt, in der sie bedruckt werden soll. Vorzugsweise wird die Trägerleiste zumindest größtenteils in einer auswerferseitigen Formhälfte spritzgegossen. Das ist diejenige Formhälfte, die der anderen anspritzseitigen Formhälfte gegenüberliegt bzw. hiermit korrespondiert. Da der angußseitigen Formhälfte die Plastifiziereinheit der Spritzgießmaschine zugeordnet ist, lässt sich die gegenüberliegende auswerferseitige Formhälfte leichter zusammen mit der darin gebildeten Trägerschicht zur Druckeinheit verfahren, die den Digitaldruck vornimmt.

Eine andere Ausgestaltungsmöglichkeit des Verfahrens sieht es vor, dass die zu bedruckende Seite der gespritzten Trägerschicht zunächst mit wenigstens einer Beschichtung, vorzugsweise einer Farbschicht, versehen wird, bevor darauf die Bedruckung durch Digitaldruck erfolgt. Die Zwischenschicht kann zur Verbesserung des Erscheinungsbilds des Digitaldrucks beitragen, aber auch alternativ oder zusätzlich als Haftvermittler zwischen der gespritzten Trägerschicht und dem Digitaldruck.

Das Verfahren sieht es im Falle eines bedruckten Kunststoffgegenstands mit einer Deckschicht vor, nach dem Bedrucken auf die sichtbare, freiliegende Seite der Bedruckung die mindestens teil-transparente Deckschicht aufzuspritzen. Bevorzugt erfolgt das Aufspritzen der Deckschicht in einer separaten Spritzgießmaschine, die eine anspritzseitige Formhälfte aufweist, in der mindestens ein Formnest für die Deckschicht vorhanden ist. Bei diesem Verfahren werden die Trägerschicht und die Deckschicht nacheinander gespritzt, wobei zwischen den beiden Spritzvorgängen die Bedruckung im Digitaldruckverfahren bei in der betreffenden Formhälfte verbleibender Trägerschicht erfolgt.

Besonders vorteilhaft ist es, wenn bis nach dem Spritzgießen der Deckschicht die Trägerschicht in derjenigen Formhälfte verbleibt, in der sie gespritzt worden ist. Es kann dadurch die gleiche, vorzugsweise auswerferseitige, Formhälfte zur Bildung eines Teils der Form für die Spritzgießvorgänge in beiden Spritzgießmaschinen verwendet werden.

Eine vorteilhafte Möglichkeit der Weiterbildung des Verfahrens sieht es vor, nach dem erfolgten Spritzen der Deckschicht den dann vorzugsweise fertig gedruckten Kunststoffgegenstand bei geöffneter Spritzgussform aus der Formhälfte, in der die Trägerschicht gespritzt worden ist, vorzugsweise der auswerferseitigen Formhälfte, auszuwerfen. Dadurch hat die auswerferseitige Formhälfte, in der die Trägerschicht gebildet wird, mehrere Funktionen. Sie dient zur Positionierung der Trägerschicht beim Digitaldruck, gegebenenfalls als Formhälfte zum Spritzgießen mit der zweiten Spritzgussmaschine und zum Auswerfen des fertigen und digital bedruckten Kunststoffgegenstands.

Eine Vorrichtung zur Lösung der eingangs genannten Aufgabe weist die Merkmale des Anspruchs 8 auf. Diese Vorrichtung verfügt über eine Transfereinrichtung, die ausgebildet ist, um die Formhälfte mit der darin sich befindenden zu bedruckenden Trägerschicht zur Digitaldruckeinrichtung und auch wieder zurück zur Spritzgussmaschine oder zu einer nachfolgenden Spritzgussmaschine zu verfahren. Die Transfereinrichtung dient dazu, eine die Trägerschicht bildende bzw. aufnehmende Formhälfte der Spritzgussform oder die Digitaldruckeinrichtung derart umzuorientieren und/oder zu verfahren, dass sie in eine exakte Relativposition zueinander gelangen, die einen genau platzierten und exakten Digitaldruck zulässt. Die Transfereinrichtung nimmt dabei die genaue Positionierung zwischen der Formhälfte mit der darin positionsgenau gehaltenen und zu bedruckenden Trägerschicht und der Form vor. Weil die Trägerschicht mindestens zur Bedruckung in der Form belassen wird, braucht entweder nur die Formhälfte oder die Digitaldruckeinrichtung in die Druckposition überführt zu werden. Dieses kann auf festgelegten Bahnen oder Achsen geschehen, die ihre Position stets beibehalten und dadurch die exakte Ausrichtung und Positionierung der zu bedruckenden Trägerschicht mit der diese haltenden Formhälfte und der Digitaldruckeinrichtung herbeiführen. Dazu kann die Transfereinrichtung im einfachsten Falle von einem handelsüblichen Handhabungsroboter gebildet sein.

Sobald die Digitaldruckeinrichtung und die Formhälfte mit der zu bedruckenden Trägerschicht ihre vorgesehene Relativposition zu einander von der Transfereinrichtung erhalten haben, kann bevorzugt die Transfereinrichtung dazu dienen, die vorgesehene Relativposition der Formhälfte zur Digitaldruckeinrichtung oder umgekehrt während des Digitaldrucks zu fixieren. Dabei dient die Formhälfte, in der die Trägerschicht hergestellt worden ist, gleichzeitig zum Halten, Einspannen und/oder zur lageunveränderlichen Fixierung der Trägerschicht beim Digitaldruckvorgang. Die Vorrichtung ermöglicht es so, die Trägerschicht genau und exakt im Digitaldruck zu bedrucken.

Nach dem Bedrucken der Trägerschicht wird der fertige Kunststoffgegenstand vorzugsweise durch die Auswerfer in der auswerferseitigen Formhälfte entformt. Danach wird die leere Formhälfte dann von der Transfereinrichtung zurück verfahren in die Spritzgussmaschine zum Spritzen der Trägerschicht für den nächsten Kunststoffgegenstand. Die Transfereinrichtung bildet somit ein Shuttle-System zwischen der Spritzguss maschine und der Digitaldruckeinrichtung sowie gegebenenfalls einer zusätzlichen Entformstation. Bevorzugt befindet sich die Entformstation aber dort, wo auch der Digitaldruck stattfindet, so dass im einfachsten Falle die Formhälfte von der Transfereinrichtung nur zwischen zwei Positionen hin und her verfahren werden muss, nämlich von der Spritzgussmaschine zur Digitaldruckeinrichtung und umgekehrt.

Eine Weiterbildungsmöglichkeit der Vorrichtung sieht zwei Spritzgussmaschinen vor, wobei zwischen den Spritzgussmaschinen die Digitaldruckeinrichtung vorgesehen ist oder die Digitaldruckeinrichtung einer der beiden Spritzgussmaschinen zugeordnet ist. Durch die zwei Spritzgussmaschinen ist es möglich, den zu druckenden Kunststoffgegenstand aus zwei nacheinander gespritzten Teilen zu bilden, zwischen denen die von der Digitaldruckeinrichtung erzeugte Bedruckung sich befindet, insbesondere eingebettet ist. Beispielsweise wird von der ersten Spritzgussmaschine die Trägerschicht des zu bedruckenden Kunststoffgegenstands hergestellt, danach der Digitaldruck auf die Trägerschicht aufgebracht und anschließend auf den Digitaldruck auf der Trägerschicht eine Deckschicht aufgebracht. Die vorzugsweise mindestens teilweise transparente, vorzugsweise klarglasähnliche Deckschicht überdeckt dann die von der Digitaldruckeinrichtung hergestellte Bedruckung. Die Deckschicht schützt dabei nicht nur die Bedruckung; sie verbessert oder unterstützt aber auch ihr Erscheinungsbild, vor allem, wenn die Deckschicht linsenartig ausgebildet ist oder eine profilierte Außenseite aufweist. Die Deckschicht lässt sich mit einer zweiten Spritzgussmaschine im Anschluss an den Digitaldruck zur Fertigstellung des Kunststoffgegenstands bilden.

Bei einer Vorrichtung mit zwei vorzugsweise parallelen Spritzgussmaschinen ist die Transfereinrichtung ausgebildet, um die Formhälfte der Trägerschicht zwischen den benachbarten Spritzgussmaschinen hin- und herzufahren und außerdem für den Digitaldruck in eine exakte Position zur Digitaldruckeinrichtung zu bringen und dort während des Digitaldruckvorgangs (temporär) unbeweglich zu fixieren.

Die Transfereinrichtung kann zum shuttleartigen Hin- und Hertransport mit einer einzigen Formhälfte ausgebildet sein, aber auch zum umlaufenden Transport der Formhälften zur Bildung der Trägerschicht und Fixierung derselben mindestens an der Digitaldruckeinrichtung. Dadurch können bei jedem Takt der Transfereinrichtung an beiden Spritzgussmaschinen gleichzeitig eine Trägerschicht und eine Deckschicht gespritzt werden, und auch der Digitaldruck erfolgen. Eine solche Vorrichtung lässt eine kostengünstige Herstellung von im Digitaldruck bedruckten Kunststoffgegenständen zu.

Eine bevorzugte Ausgestaltung der Vorrichtung sieht es vor, die gleiche Formhälfte, vorzugsweise die Formhälfte zur Bildung der Trägerschicht, bei beiden Spritzgussmaschinen einzusetzen. Hingegen findet bei jeder Spritzgussmaschine eine individuelle andere Formhälfte, insbesondere angussseitige Formhälfte, Verwendung. Der Einsatz einer gleichen Formhälfte bei allen Spritzgussmaschinen vereinfacht den Formvorrat. Die Transfereinrichtung übernimmt dabei den Transport der bei allen Spritzgussmaschinen verwendeten Formhälften zu den einzelnen Spritzgussmaschinen und auch zur Digitaldruckeinrichtung.

Die Transfereinrichtung ist bevorzugt so ausgebildet, dass sie die von ihr weitertransportierbare Formhälfte an genau festgelegten Positionen der jeweiligen Spritzgussmaschine und der Digitaldruckeinrichtung positioniert, und zwar anhält, und temporär, nämlich während der Bearbeitungszeit an der jeweiligen Station, spielfrei fixiert. Dadurch wird unter Anderem sichergestellt, dass die Digitaldruckeinrichtung die Bedruckung auf der Trägerschicht an der exakten Stelle genau ausgerichtet vornehmen kann.

Bevorzugte Ausführungsbeispiele der Erfindung werden nachfolgend anhand der Zeichnung näher erläutert. In dieser zeigen:
- Fig. 1: eine Draufsicht auf einen bedruckten Kunststoffgegenstand,
- Fig. 2: einen vergrößerten Querschnitt durch den Kunststoffgegenstand der Fig. 1,
- Fig. 3: eine Prinzipdarstellung des ersten Ausführungsbeispiels der Vorrichtung gemäß einem ersten Arbeitstakt,
- Fig. 4: die Vorrichtung der Fig. 3 bei einem zweiten Arbeitstakt,
- Fig. 5: die Vorrichtung der Fig. 3 und 4 in einem dritten Arbeitstakt,
- Fig. 6: eine Prinzipdarstellung der Vorrichtung nach einem zweiten Ausführungsbeispiel der Erfindung,
- Fig. 7: eine Vorrichtung nach einem dritten Ausführungsbeispiel der Erfindung, und zwar eine Draufsicht auf einen Teil der Vorrichtung,
- Fig. 8: einen Schnitt VIII-VIII durch die Vorrichtung der Fig. 7, und
- Fig. 9: einen Schnitt IX-IX durch die Vorrichtung der Fig. 7.

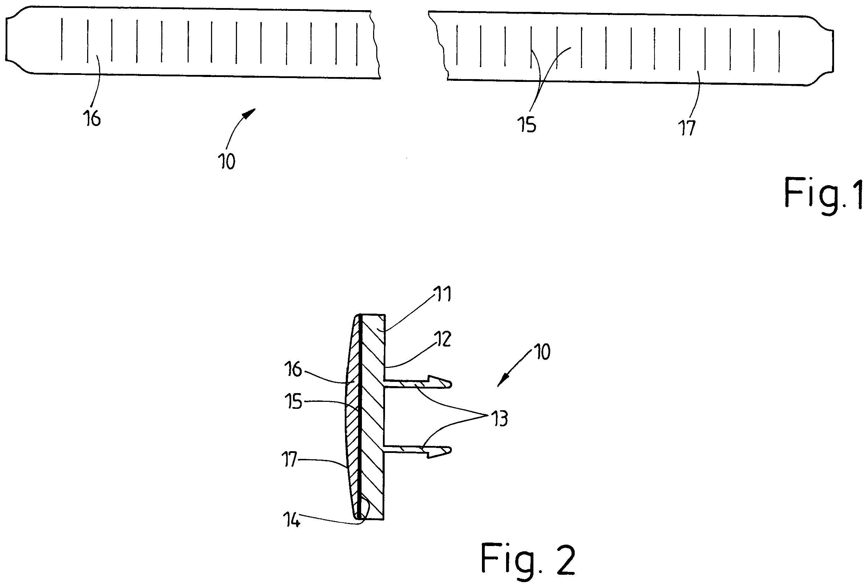

Die Fig. 1 und 2 zeigen einen als Schließleiste 10 für eine Kennzeichenhalterung ausgebildeten bedruckten Kunststoffgegenstand. Hierauf ist die Erfindung aber nicht beschränkt. Die Erfindung eignet sich für beliebige bedruckte Kunststoffgegenstände.

Die gezeigte, längliche Schließleiste 10 verfügt über eine vorzugsweise massive, leistenförmige Trägerschicht 11 mit einem im gezeigten Ausführungsbeispiel rechteckigen Querschnitt. Eine Rückseite 12 der Trägerschicht 11 ist mit mehreren Rastzungen 13 versehen. Bei der gezeigten Schließleiste 10 ist die zur Bedruckung weisende Vorderseite 14 ebenflächig ausgebildet. Die Vorderseite 14 kann bei Bedarf aber auch profiliert sein, beispielsweise durch eine konkave oder konvexe Wölbung.

Auf die Vorderseite 14 der Trägerschicht 11 ist eine dünnschichtige Bedruckung 15 aufgebracht. Die Bedruckung 15 kann in beliebiger Weise gestaltet sein, insbesondere auch in beliebigen Farben, vor allem auch mehrere verschiedene Farben aufweisen. Beispielsweise kann die Bedruckung bildhaft und/oder graphisch gestaltet sein. Auch kann die Bedruckung 15 alternativ oder zusätzlich Ziffern, Zahlen oder sonstige Zeichen aufweisen. Die Bedruckung ist auf die Vorderseite 14 der Trägerschicht 11 durch Digitaldruck aufgebracht, und zwar vorzugsweise aus mehreren nachfolgenden aufgedruckten Schichten.

Gegebenenfalls kann zwischen der Bedruckung 15 und der Vorderseite 14 der Trägerschicht 11 eine in den Figuren nicht gezeigte Zwischenschicht vorgesehen sein. Die Zwischenschicht dient beispielsweise dazu, den Kontrast zwischen der Farbe der Trägerschicht 11 und der Bedruckung 15 zu beeinflussen, insbesondere zu verringern. Bei einer eine schwarze Vorderseite 14 aufweisenden Trägerschicht 11, insbesondere einer insgesamt aus schwarzem Kunststoff gebildeten Trägerschicht 11, kann die Zwischenschicht eine helle Farbschicht sein, wenn die Bedruckung 15 überwiegend hell ist. Auch kann die Zwischenschicht vollflächig die gleiche Farbe, zum Beispiel weiß, haben.

Die gezeigte Schließleiste 10 weist über der Bedruckung 15 eine Deckschicht 16 auf. Die Deckschicht 16 ist vorzugsweise aus einem transparenten farblosen oder gegebenenfalls auch einem eingefärbten Kunststoff gebildet. Besonders bevorzugt ist die Bildung der Deckschicht 16 aus einem vollständig durchsichtigen, glasklaren thermoplastischen Kunststoff, der gegebenenfalls auch etwas eingefärbt sein kann. Die gezeigte Deckschicht 16 überdeckt die Bedruckung 15 vollflächig, indem die Fläche der Deckschicht 16 mit der Fläche der Vorderseite 14 der Trägerschicht 11 übereinstimmt. Es ist aber auch denkbar, die Deckschicht 16 etwas kleiner auszubilden als die Trägerschicht 11, so dass die größere Trägerschicht 11 die Deckschicht 16 nach Art eines Rahmens umgibt. Bei gegenüber der Trägerschicht 11 kleinerer Deckschicht 16 entspricht bevorzugt die Fläche der Bedruckung 15 der Fläche der kleineren Deckschicht 16, so dass die Fläche der Bedruckung 15 genauso groß ist wie die Fläche der Deckschicht 16. Dadurch überdeckt die Deckschicht 16 die gesamte Bedruckung 15. Auf diese Weise ist die Bedruckung 15 zwischen der Trägerschicht 11 und der Deckschicht 16 eingeschlossen, wobei infolge der transparenten bzw. glasklaren Ausbildung der Deckschicht 16 vom Betrachter die Bedruckung 15 durch die Deckschicht 16 hindurch sichtbar ist.

Bei der hier gezeigten Schließleiste 10 ist die der Bedruckung 15 gegenüberliegende und zum Betrachter weisende Vorderseite 17 der Deckschicht 16 gewölbt, und zwar konvex nach außen gewölbt. Alternativ ist aber auch eine umgekehrte konkave Wölbung denkbar. Durch die gewölbte Vorderseite 17 bildet die Deckschicht 16 eine Art Linse über der Bedruckung 15, wodurch die Bedruckung 15 optisch beeinflusst, insbesondere aufgewertet, wird. Denkbar ist es auch, die Vorderseite 17 der Deckschicht 16 genauso wie die Vorderseite 14 der Trägerschicht 11 ebenflächig auszubilden. Dann verläuft die Vorderseite 17 der Deckschicht 16 parallel zur Vorderseite 14 der Trägerschicht 11. Schließlich kann die Vorderseite 17 der Deckschicht 16 auch in anderer Weise profiliert sein, beispielsweise wellig, geriffelt, gestuft oder dergleichen.

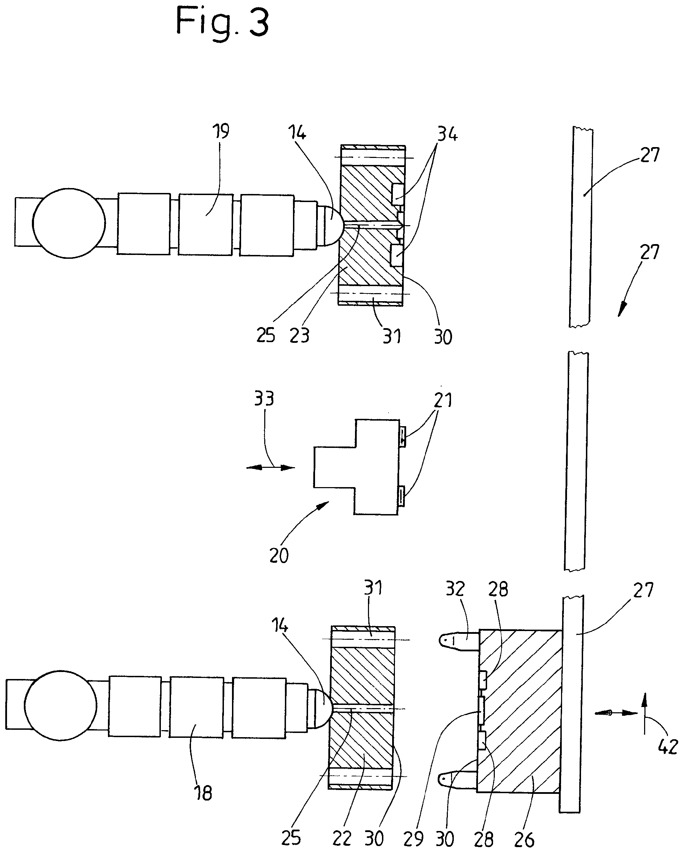

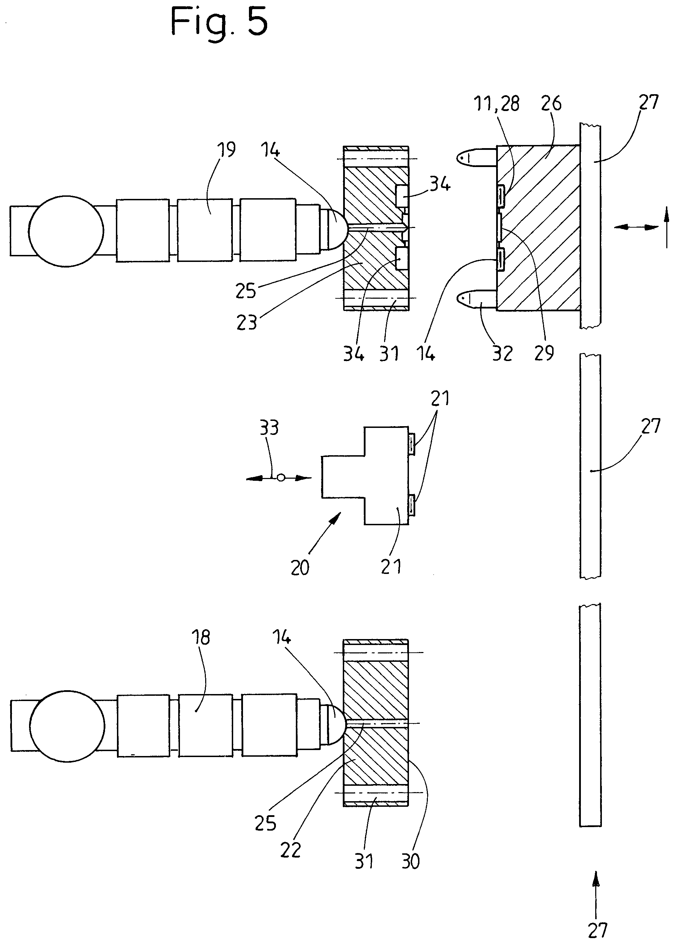

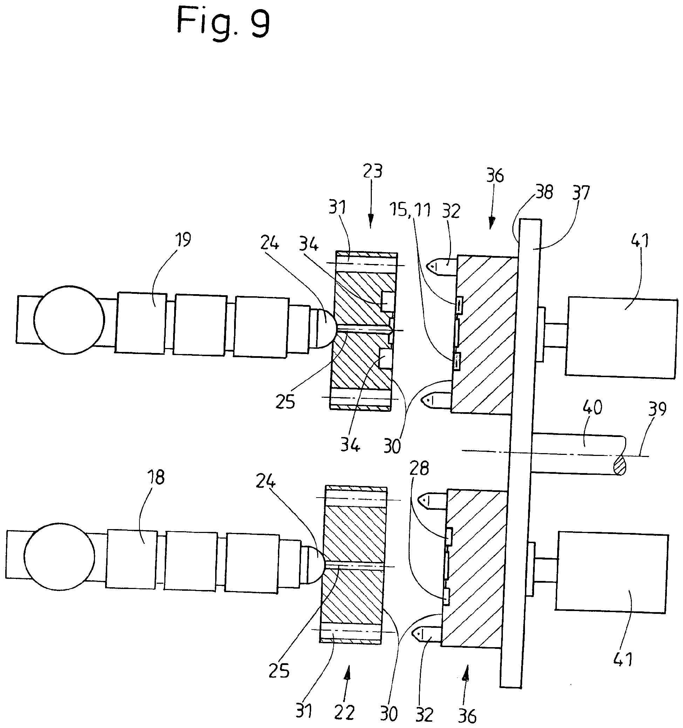

Die Fig. 3 bis 9 zeigen unterschiedliche Vorrichtungen zur Herstellung eines bedruckten Kunststoffgegenstands wie beispielsweise auch der Schließleiste 10.

Die in den Fig. 3 bis 5 gezeigte Vorrichtung verfügt über zwei benachbart zueinander, insbesondere parallel nebeneinander, angeordnete Spritzgussmaschinen 18, 19. Bevorzugt handelt es sich um gleiche Spritzgussmaschinen 18. Zwischen den Spritzgussmaschinen 18 und 19 ist eine in den Figuren nur symbolisch dargestellte Digitaldruckeinrichtung 20 angeordnet. Die Spritzgussmaschinen 18 und 19 und auch die Digitaldruckeinrichtung 20 sind mindestens mit ihrem Grundrahmen bzw. Füßen ortsunveränderlich in exakt festgelegten, fixen Relativpositionen zueinander angeordnet. Dabei können jedoch ein Druckkopf 21 oder gegebenenfalls auch mehrere Druckköpfe der Digitaldruckeinrichtung 20 beim Digitaldruckvorgang auf mindestens einer festgelegten und ebenfalls ortsveränderlichen Achse, bei der es sich im gezeigten Ausführungsbeispiel um eine gerade Linearachse handelt, hin- und herbewegt werden.

Jeder Spritzgussmaschine 18, 19 ist eine eigene Formhälfte 22 bzw. 23 fest zugeordnet. Die Formhälften 22, 23 stellen dadurch angussseitige Formhälften 22, 23 dar. Im gezeigten Ausführungsbeispiel sind die angussseitigen Formhälften 22, 23 unterschiedlich ausgebildet. Ein Düsenmundstück 24 jeder Spritzgussmaschine 18, 19 mündet in einem nur schematisch in den Fig. 3 bis 5 dargestellten Anspritzkanal 25 der Formhälfte 22 und 23. Dieser kann auf unterschiedliche Weise realisiert sein, je nachdem, wie der Anguss des herzustellenden Kunststoffgegenstands gestaltet ist und/oder welches Angussprinzip eingesetzt wird.

Die Form jeder Spritzgussmaschine 18 bzw. 19 wird gebildet durch eine zweite Formhälfte, bei der es sich bevorzugt um eine auswerferseitige Formhälfte 26 handelt. Die Vorrichtung verfügt über eine einzige auswerferseitige Formhälfte 26, die einen Teil der Form der Spritzgussmaschine 18 und 19 bildet.

Der Formhälfte 26 ist eine nur schematisch in den Fig. 3 bis 5 gezeigte Transfereinrichtung 27 zugeordnet. Diese dient dazu, die ihr zugeordnete Formhälfte 26 nach dem Shuttle-Prinzip zwischen den Spritzgussmaschinen 18, 19 und dabei an der dazwischen angeordneten Digitaldruckeinrichtung 20 hin und her zu verfahren. So bildet die Formhälfte 26 wechselweise jeweils eine Hälfte der Form der Spritzgussmaschine 18 und der Spritzgussmaschine 19. Außerdem dient die von der Transfereinrichtung 27 verfahrbare Formhälfte 26 auch dazu, die von der Spritzgussmaschine 18 in der Formhälfte 26 gespritzte Trägerschicht 11 oder einen sonstigen Teil des herzustellenden Kunststoffgegenstands positionsgenau zur Digitaldruckeinrichtung 20 zu transportieren und den Kunststoffgegenstand, insbesondere die Trägerschicht 11, beim Digitaldruck absolut spielfrei und ortsunveränderlich in einer fixen Relativposition zur Digitaldruckeinrichtung 20 zu halten.

Die Formhälfte 26 ist im gezeigten Ausführungsbeispiel mit zwei gleichen Nestern 28 mit der Kontur jeweils einer Trägerschicht 11 oder eines anderen Teils des herzustellenden bedruckten Kunststoffgegenstands versehen. Durch einen Angusskanal 29 gelangt von der Plastifiziereinheit der Spritzgussmaschine 18 plastifizierter Kunststoff über den Anspritzkanal 23 in der Formhälfte 22 in den Angusskanal 29 und von dort in die beiden gegenüberliegenden Nester 28 zur Bildung jeweils einer Trägerschicht 11. Die gleichen Nester 28 sind derart in der Formhälfte 26 angeordnet, dass die zu bedruckende Vorderseite 14 der Trägerschicht 11 bündig mit einer Trennebene 30 der Formhälfte 26 abschließt. Es ist aber auch denkbar, dass die Trägerschicht 11 teilweise in der angussseitigen Formhälfte 22 vor der Spritzgussmaschine 18 gebildet wird. Diese verfügt dann ebenfalls über zwei Nester, die den Nestern 28 der Formhälfte 26 deckungsgleich gegenüberliegen. Dann wird die jeweilige Trägerschicht 11 teilweise in der angussseitigen Formhälfte 22 und teilweise in der auswerferseitigen Formhälfte 26 gebildet, wobei vorzugsweise ein größerer Teil der Trägerschicht 11 in der auswerferseitigen Formhälfte 26 gespritzt wird, damit beim Auffahren der Form die gespritzte Trägerschicht 11 in der auswerferseitigen Formhälfte verbleibt.

In den Fig. 3 bis 5 sind die Formen im geöffneten Zustand gezeigt. Dabei ist die auswerferseitige Formhälfte 26 von der angussseitigen Formhälfte 22 etwas weggefahren, also die Formhälften 22 und 26 der Form auseinandergezogen. Zum Spritzen werden die Formhälften 26 wieder zusammengefahren, so dass sich ihre Trennebenen 30 berühren und die Nester 28 geschlossen sind. Zur exakten Ausrichtung und Positionierung der Formhälften 26 und 22 bzw. 23 zueinander weisen im gezeigten Ausführungsbeispiel die angussseitigen Formhälften 22 und 23 Führungsbohrungen 31 oder auch Führungshülsen auf, während die auswerferseitige Formhälfte 26 mit gegenüber der Trennebene 30 vorstehenden Führungssäulen 32 versehen ist. Es ist aber auch denkbar, die Führungssäulen 32 an der jeweiligen angussseitigen Formhälfte 22 bzw. 23 anzuordnen. Dann sind die Führungsbohrungen 31 bzw. Führungshülsen der auswerferseitigen Formhälfte 26 zugeordnet.

Die Transfereinrichtung 27 verfügt über mindestens eine lineare, geradlinige Verfahr- und Führungsachse 33. Längs dieser Verfahr- und Führungsachse 33 ist die Formhälfte 26 von der Spritzgussmaschine 18 zur Digitaldruckeinrichtung 20 und weiter zur Spritzgussmaschine 19 verfahrbar. An der Spritzgussmaschine 19 wird die Schließleiste 10 mit der Deckschicht 16 versehen. Dazu sind in der angussseitigen Formhälfte 23 vor der Spritzgussmaschine 19 zwei Nester 34 für jeweils eine Deckschicht 16 oder sonstige Teile des herzustellenden Kunststoffgegenstands angeordnet. Die Nester 34 für die Deckschichten 16 sind zum Zwecke der besseren Darstellung in den Fig. 3 bis 5 größer dargestellt als in der Fig. 2 gezeigt. Alternativ kann die Transfereinrichtung auch von mindestens einem Roboter, insbesondere Handhabungsroboter, gebildet sein.

Die Transfereinrichtung 27 weist mindestens im Bereich der Digitaldruckeinrichtung 20 nicht gezeigte Positionier- und Arretiermittel auf. Diese dienen dazu, den Transport der Formhälfte 26 längs der Transfereinrichtung 27 in einer bestimmten Relativposition zur Digitaldruckeinrichtung 20, insbesondere dem mindestens einen Druckkopf 21 derselben, exakt zu stoppen, also zu positionieren und außerdem die Formhälfte 26 in der von der Transfereineinrichtung 27 vorgegebenen Position während des Digitaldrucks spielfrei zu fixieren. Gegebenenfalls kann es dazu vorgesehen sein, dass eine Basis der Digitaldruckeinrichtung 20 Führungshülsen oder Führungsbohrungen aufweist, die mit den Führungssäulen 32 der Formhälfte 26 korrespondieren, so dass die Digitaldruckeinrichtung 20 beim Digitaldruck exakt die gleiche Position zur Formhälfte 26 einnimmt, die bei der Herstellung der Trägerschicht 11 die Formhälfte 26 zur Formhälfte 22 inne hat und der mindestens eine Druckkopf 21 spielfrei auf mindestens einer festgelegten Linearachse gegenüber der Basis der Digitaldruckeinrichtung 20 verfahrbar ist.

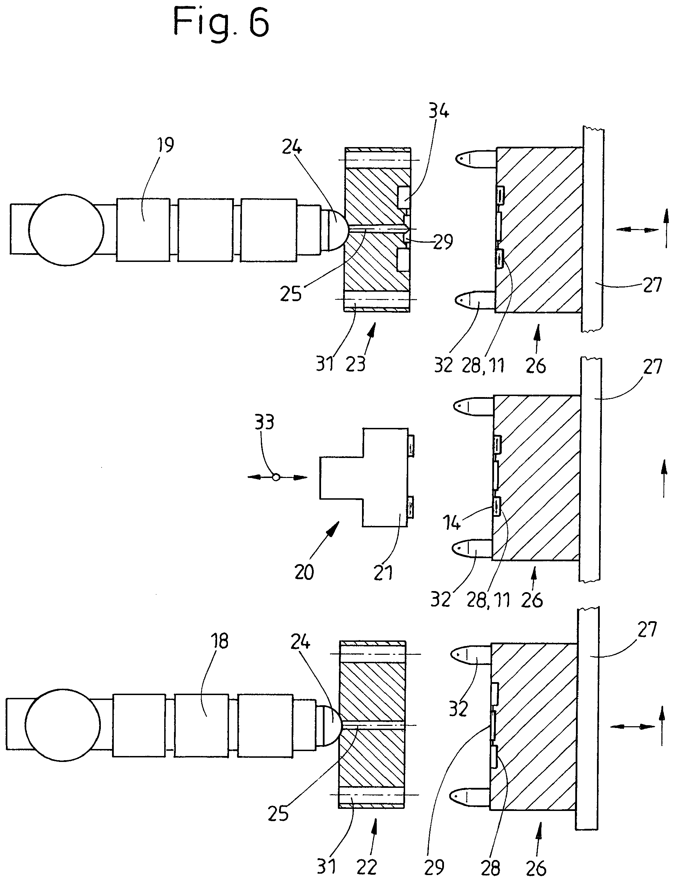

Die Fig. 6 zeigt ein anderes Ausführungsbeispiel der Vorrichtung. Dieses unterscheidet sich von der zuvor beschriebenen Vorrichtung nur dadurch, dass die Transfereinrichtung 35 zum umlaufenden Weitertransport der Formhälften 36 ausgebildet ist und nicht nur eine einzige auswerferseitige Formhälfte 36 vorgesehen ist, sondern mindestens drei gleiche auswerferseitige Formhälften 36. Bei mindestens drei auswerferseitigen gleichen Formhälften 36 gemäß der Fig. 6 ist jeder Station eine Formhälfte 36 zugeordnet, und zwar jeder Spritzgussmaschine 18 und 19 und der Digitaldruckeinrichtung 20. Dadurch können beide Spritzgussmaschinen 18 und 19 sowie die Digitaldruckeinrichtung 20 durchgehend arbeiten. Es finden lediglich Unterbrechungen in der Zeit des Weitertransports der Formhälften 36 von der ersten Spritzgussmaschine 18 zur Digitaldruckeinrichtung 20, von der Digitaldruckeinrichtung 20 zur zweiten Spritzgussmaschine 19 und von der zweiten Spritzgussmaschine 19 zurück zur ersten Spritzgussmaschine 18 statt. Die drei gleichen auswerferseitigen Formhälften 36 der Fig. 6 sind jeweils genauso ausgebildet wie die Formhälfte 26 des Ausführungsbeispiels der Fig. 3 bis 5.

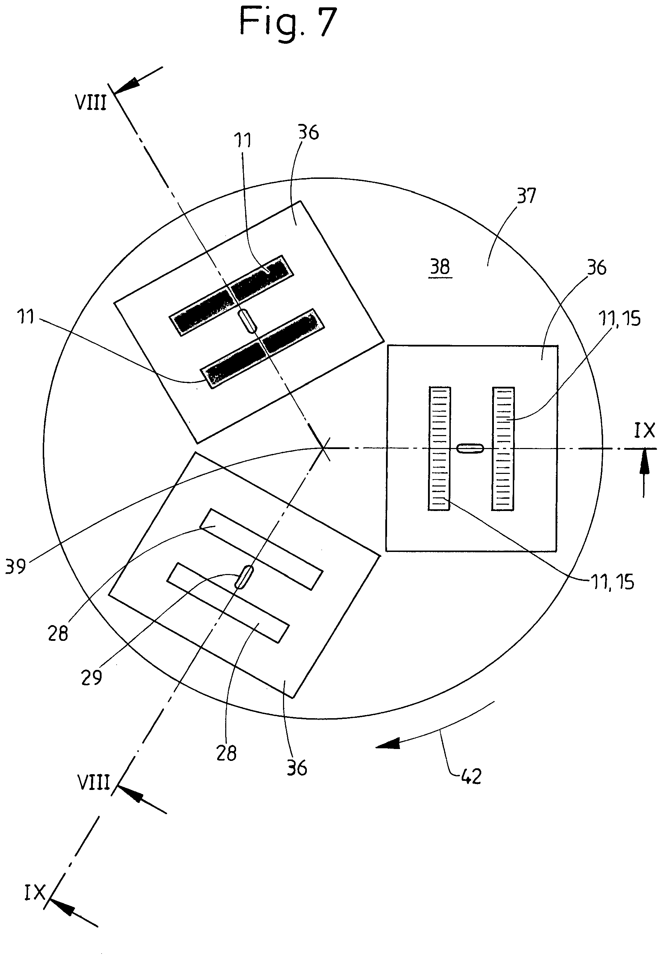

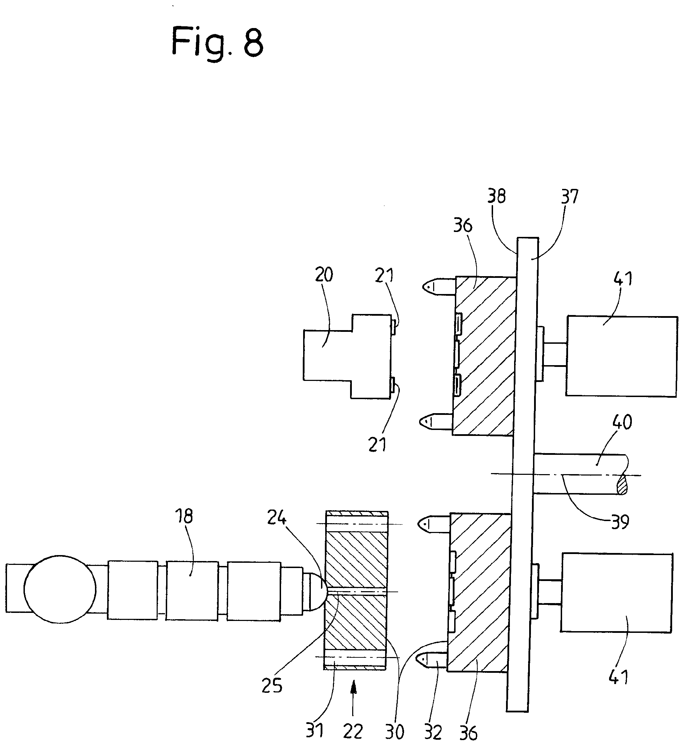

Die Fig. 7 und 8 zeigen eine Vorrichtung nach einem weiteren Ausführungsbeispiel der Erfindung. Dieses unterscheidet sich vom Ausführungsbeispiel der Fig. 6 nur dadurch, dass statt einer die Formhälften 36 linear weitertransportierenden Transfereinrichtung 35 bei der Vorrichtung der Fig. 7 bis 9 eine als Drehteller 37 ausgebildete Transfereinrichtung vorgesehen ist. Der Drehteller 37 verfügt über eine im gezeigten Ausführungsbeispiel kreisrunde Aufnahmeplatte 38, die um eine mittige vertikale oder auch horizontale Drehachse 39 taktweise im Uhrzeigersinn verdrehbar ist. Im gezeigten Ausführungsbeispiel sind der Aufnahmeplatte 38 der Transfereinrichtung drei gleich ausgebildete auswerferseitige Formhälften 36 zugeordnet, und zwar mit einem Winkelversatz von 120°. Dadurch werden bei jeder Drittelkreisdrehung gleichzeitig alle drei gleichen Formhälften 36 zur nächsten Station der Vorrichtung transportiert, also von der ersten Spritzgussmaschine 18 zur Digitaldruckeinrichtung 20, von der Digitaldruckeinrichtung 20 zur zweiten Spritzgussmaschine und von der zweiten Spritzgussmaschine 19 zurück zur ersten Spritzgussmaschine 18.

Infolge der auf dem Drehteller 37 mit einem Wickelversatz von 120° angeordneten gleichen Formhälften 36 sind die beiden Spritzgussmaschinen18 und 19 und die Digitaldruckeinrichtung 20 bei der hier gezeigten Vorrichtung wie die drei Formhälften 36 auf einem Teilkreis angebracht, der dem Teilkreis entspricht, auf dem die Formhälften 36 auf dem Drehteller 37 liegen. Auf dem Teilkreis sind die Spritzgussmaschinen 18 und 19 und die Digitaldruckeinrichtung 20 genauso wie die drei Formhälften 36 auf dem Drehteller 37 mit einem gleichen Winkelversatz von jeweils 120° angeordnet.

Bei der Vorrichtung der Fig. 7 bis 9 entsprechen die den Spritzgussmaschinen 18 und 19 zugeordneten angussseitigen Formhälften den Formhälften 22 und 23 der vorherigen Ausführungsbeispiele. Deswegen werden für gleiche Teile auch gleiche Bezugsziffern verwendet.

Das erfindungsgemäße Verfahren wird nachfolgend anhand der Vorrichtung der Fig. 3 bis 5 erläutert:
Von der Spritzgussmaschine 18 wird die Trägerschicht 11 bei geschlossener Form in die Formhälfte 26 gespritzt. Dabei liegt die zu bedruckende Vorderseite 14 der Trägerschicht 11 in der Trennebene 30 der Formhälfte 26 bzw. etwas davor, wenn ein Teil der Trägerschicht 11 auch in der Formhälfte 22 gebildet wird. Bei geöffneter Form wird die Formhälfte 26 von der Transfereinrichtung 27 in Transferrichtung 42 weitertransportiert zur Digitaldruckeinrichtung 20. Dabei durchläuft die Formhälfte 26 bevorzugt eine Kühlstrecke, so dass die in der Formhälfte 26 verbleibende abgekühlte Trägerschicht 11 von der Formhälfte 26 in eine vorgegebene Relativposition gegenüber der Digitaldruckeinrichtung 20 gebracht wird. Diese vorgegebene Relativposition ist abgestimmt auf die Positionierung der von der Digitaldruckeinrichtung 20 herzustellenden Bedruckung 15 auf der Vorderseite 14 der Trägerschicht 11. An der Transfereinrichtung 27 wird dann die Formhälfte 26 mit den sich in den Nestern 28 derselben noch befindenden beiden Trägerschichten 11 spielfrei fixiert. Diese Fixierung oder Feststellung der Formhälfte 26 mit den darin befindlichen Trägerschichten 11 bleibt während des Digitaldruckvorgangs, mindestens während des Betriebs der Digitaldruckeinrichtung 20 zur Herstellung der Bedruckung 15, unverändert aufrechterhalten.

Zur Herstellung der Bedruckungen 15 wird die Druckeinrichtung 20 auf der Verfahr- und Führungsachse linear spielfrei geführt so dicht an die Trennebene 30 und somit die zu bedruckenden Vorderseiten 14 der Trägerschichten 11 herangefahren, dass der Digitaldruck stattfinden kann. Vorzugsweise werden dabei die beiden getrennten Druckköpfe 21 für eine Trägerschicht 11 gemeinsam synchron über eine weitere lineare Bahn senkrecht zur Zeichnungsebene (Fig. 3) verfahren. Je nach der Art der Bedruckung 15 kann auf der senkrecht zur Zeichnungsebene verlaufenden Bahn die Digitaldruckeinrichtung 20 mit den beiden Druckköpfen 21, gegebenenfalls aber auch nur einem Druckkopf 21, mehrmals hin und her verfahren werden.

Nachdem die Bedruckungen 15 der Trägerschichten 11 hergestellt sind, wird die Digitaldruckeinrichtung 20 wieder auf ihrer Verfahr- und Führungsachse zurückbewegt, also von der Formhälfte 26 wieder beabstandet. Dann wird gegebenenfalls nach Lösen der positionsgenauen Arretierung der Formhälfte 26 vor bzw. neben der Digitaldruckeinrichtung 20 von der Transfereinrichtung 27 die Formhälfte 26 mit den beiden bedruckten Trägerschichten 11 um einen weiteren Takt in Transferrichtung 42 weiterbewegt vor die der zweiten Spritzgussmaschine 19 zugeordnete Formhälfte 23. Durch Heranfahren der Formhälfte 26 mit den darin sich noch befindenden bedruckten Trägerschichten 11 an die der zweiten Spritzgussmaschine 19 zugeordnete Formhälfte 23 wird die Form vor der Spritzgussmaschine 19 geschlossen. Von der Spritzgussmaschine 19 wird dann in den Nestern 34 der Formhälfte 23 die Deckschicht 16 auf die mit der Bedruckung 15 versehene Vorderseite 14 der jeweiligen Trägerschicht 11 aufgespritzt. Dabei werden die Bedruckungen 15 zwischen den beiden gleichzeitig gebildeten Deckschichten 16 und den zuvor hergestellten Trägerschichten 11 eingebettet und es kommt eine Verbindung zu den Trägerschichten 11 bzw. deren Bedruckung 15 und den Deckschichten 16 zustande.

Abschließend wird die Form aufgefahren und die beiden fertigen Schließleisten 10 vorzugsweise durch ein Auswerfersystem in der Formhälfte 26 ausgeworfen. Nach dem Auswerfen der Schließleisten 10 aus der Formhälfte 26 wird diese von der Transfereinrichtung 27 wieder zurücktransportiert, und zwar an der dabei inaktiven Digitaldruckeinrichtung 20 vorbei vor die Formhälfte 22 der ersten Spritzgussmaschine 18 und durch Heranfahren der Formhälfte 26 an die Formhälfte 22 die Form vor der Spritzgussmaschine 18 geschlossen. Es beginnt dann der zuvor beschriebene Verfahrensablauf zur Herstellung der nächsten beiden bedruckten Schließleisten 10.

Die Vorrichtungen der Fig. 6 bis 9 arbeiten nach dem prinzipiell gleichen Verfahren wie die zuvor beschriebene Vorrichtung. Es werden wiederum zwei gleichzeitig von der Spritzgussmaschine 18 hergestellte Trägerschichten 11 mit der Formhälfte 26 von der Transfereinrichtung 27 vor die Digitaldruckeinrichtung 20 gefahren und hier positioniert.

Dabei verbleiben wiederum die zuvor hergestellten Trägerschichten 11 in der Formhälfte 26, wodurch sie in die exakte Position zur Herstellung der Bedruckung 15 durch die Digitaldruckeinrichtung 20 gelangen und diese Position zur Bedruckung spielfrei momentan ortsfest gehalten bzw. arretiert wird. Nach dem Herstellen der Bedruckungen 15 werden wieder im Bereich der zweiten Spritzgussmaschine 19 die Deckschichten 16 auf die Bedruckungen 15 der Vorderseiten 14 der Trägerschichten 11 aufgespritzt und dadurch gleichzeitig zwei Schließleisten 11 fertiggestellt.

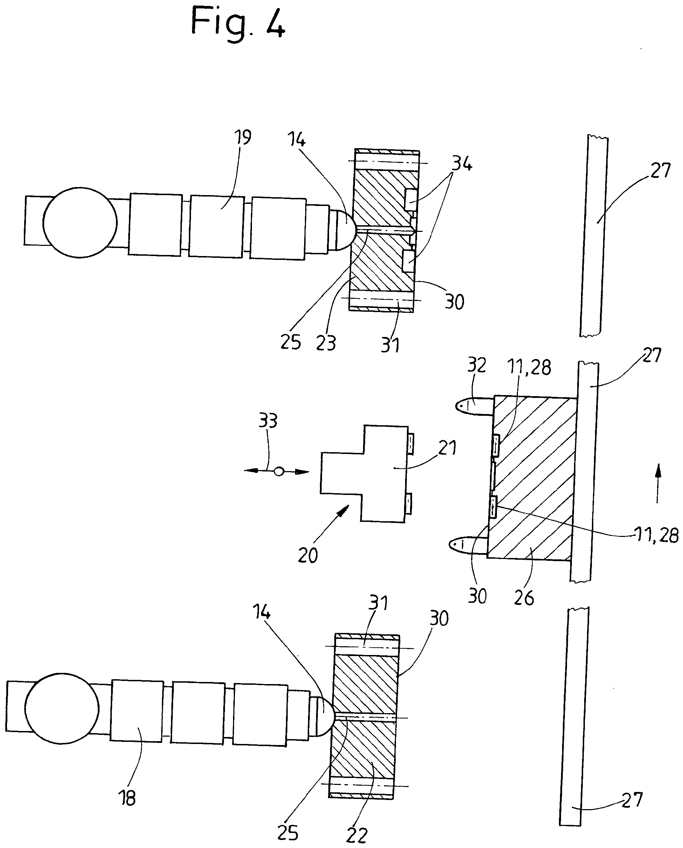

Der wesentliche Unterschied des mit der Vorrichtung der Fig. 4 bis 6 durchgeführten Verfahrens zum Verfahren nach der Fig. 3 besteht darin, dass durch Verwendung dreier identischer auswerferseitiger Formhälften 26 beim Herstellen der Trägerschichten 11 in der einen Formhälfte 26 die Trägerschichten 11 in der anderen Formhälfte 26 gleichzeitig bedruckt werden und auch gleichzeitig in der dritten Formhälfte 26 die Deckschichten 16 auf die Trägerschichten 11 bzw. die Bedruckungen 15 auf den Vorderseiten 14 derselben von der zweiten Spritzgussmaschine 19 aufgespritzt werden. Es brauchen also die Spritzgussmaschinen 18, 19 und die Digitaldruckeinrichtung 20 nicht zu warten, bis die beiden Schließleisten 10 fertiggestellt sind. Vielmehr arbeiten die Spritzgussmaschinen 18 und 19 sowie die Digitaldruckeinrichtung 20 simultan bei jedem Takt der Transfereinrichtung 27, also nach jedem gleichzeitigen Weiterfahren aller drei Formhälften 26.

Nach dem Fertigstellen zweier Schließleisten 10 an der hinteren Spritzgussmaschine 19 und Auswerfen der fertigen Schließleisten 10 aus der momentan der hinteren Spritzgussmaschine 19 von der Transfereinrichtung 27 zugeordneten Formhälfte 26 wird die leere hintere Formhälfte 26 längs einer umlaufenden Bahn von der Transfereinrichtung 27 beispielsweise unter den in der Fig. 6 gezeigten drei Formhälften 26 hinweg, zurücktransportiert zur ersten, vorderen Spritzgussmaschine 18 mit der Formhälfte 22.

Die in den Fig. 7 bis 9 dargestellte Vorrichtung arbeitet prinzipiell nach dem gleichen Verfahren wie die Vorrichtung der Fig. 6. Nur transportiert hier keine Transfereinrichtung 35 die Formhälften 36 auf einer gradlinigen Bahn an Spritzgussmaschinen 18, 19 der Digitaldruckeinrichtung 20 vorbei, sondern auf einer umlaufenden, geschlossenen Kreisbahn, und zwar in Drehrichtung 43. Demzufolge weist die Transfereinrichtung der Fig. 7 bis 9 einen um eine mittige Drehachse 39 in Drehrichtung 43 umlaufend taktweise angetriebenen Drehteller 37 auf. Auf einem der Kreisbahn entsprechenden Teilkreis sind hier die drei gleich ausgebildeten auswerferseitigen Formhälften 36 mit einem Winkelversatz um jeweils 120° angeordnet. Die drei gleichen Formhälften 36 erlauben auch einen gleichzeitigen Betrieb der Spritzgussmaschinen 18, 19 der Digitaldruckeinrichtung 20 nach jedem taktweisen Weiterdrehen der Drehscheibe um 120°. Es können also auch bei der Vorrichtung der Fig. 7 bis 9 die Spritzgussmaschinen 18, 19 und die Digitaldruckeinrichtung 20 gleichzeitig, simultan bzw. synchron betrieben werden. Der Vorteil der Vorrichtung der Fig. 7 bis 9 gegenüber der Vorrichtung der Fig. 6 besteht darin, dass das Transfersystem keine Rückförderstrecke zum Zurücktransportierten der leeren Formhälften von der zweiten Spritzgussmaschine 19 zur ersten Spritzgussmaschine 18 erfordert. Die Transferwege sind dadurch kürzer, was zu einer entsprechenden Verringerung der Taktzeiten führen kann.

Mit der den Drehteller 37 aufweisenden Transfereinrichtung erfolgt das Schließen der Formen an beiden Spritzgussmaschinen 18 und 19 durch ein Verfahren des Drehtellers mit den drei darauf angeordneten gleichen Formhälften 36 längs der Drehachse 39. Dazu dienen geeignete Hubmittel 41, beispielsweise Druckmittelzylinder. Diese sind mindestens gegenüberliegend zu den Spritzgussmaschinen 18 und 19 angeordnet, im gezeigten Ausführungsbeispiel auch gegenüberliegend zur Digitaldruckeinrichtung 20. Die den Spritzgussmaschinen 18 und 19 gegenüberliegenden Hubmittel 21 dienen gleichzeitig zum Zuhalten bzw. zum Zusammenhalten der beiden Formhälften 22 und 36 bzw. 23 und 36 während des Spritzgießens. Damit von den Hubmitteln 41 der Drehteller 27 auf der Drehachse 39 axial zu den Formhälften 22, 23 hin- und zurückbewegbar ist, ist eine Drehwelle 40 zum taktweisen drehenden Antrieb des Drehtellers 37 um jeweils 120° teleskopisch, beispielsweise als Gelenkwelle, ausgebildet.

Die zuvor beschriebenen Ausführungsbeispiele der Erfindung betreffen Formen mit zwei Nestern 28, 34 in den Formhälften 22, 23, 26 und 36. Hierauf ist die Erfindung aber nicht beschränkt. Die Erfindung eignet sich auch für Vorrichtungen mit Formen, die nur ein Nester oder mehr als zwei Nester aufweisen.

Ebenso eignet sich die Erfindung auch für Kunststoffgegenstände beliebiger Art und Gestaltung, ist also nicht auf die beschriebene Schließleiste 10 beschränkt. Insbesondere ist die Erfindung auch nicht auf eine Schließleiste 10 mit einer Trägerschicht 11 und einer Deckschicht 16 beschränkt. Schließlich eignet sich die Erfindung auch für bedruckte Kunststoffgegenstände, bei denen die Bedruckung mit keiner gespritzten, durchsichtigen Deckschicht überdeckt ist.

**Bezugszeichenliste:**

| | | | |
|---|---|---|---|
| 10 | Schließleiste | 36 | Formhälfte |
| 11 | Trägerschicht | 37 | Drehteller |
| 12 | Rückseite | 38 | Aufnahmeplatte |
| 13 | Rastzunge | 39 | Drehachse |
| 14 | Vorderseite | 40 | Drehwelle |
| 15 | Bedruckung | 41 | Hubmittel |
| 16 | Deckschicht | 42 | Transferrichtung |
| 17 | Vorderseite | | |
| 18 | Spritzgussmaschine | | |
| 19 | Spritzgussmaschine | | |
| 20 | Digitaldruckeinrichtung | | |
| 21 | Druckkopf | | |
| 22 | Formhälfte | | |
| 23 | Formhälfte | | |
| 24 | Düsenmundstück | | |
| 25 | Anspritzkanal | | |
| 26 | Formhälfte | | |
| 27 | Transfereinrichtung | | |
| 28 | Nest | | |
| 29 | Angusskanal | | |
| 30 | Trennebene | | |
| 31 | Führungsbohrung | | |
| 32 | Führungssäule | | |
| 33 | Verfahr- und Führungsachse | | |
| 34 | Nest | | |
| 35 | Transfereinrichtung | | |

## Patentansprüche

1. Verfahren zur Herstellung eines bedruckten Kunststoffgegenstands, wobei durch Spritzgießen eine gespritzte Trägerschicht (11) erzeugt wird und eine Seite der Trägerschicht (11) mit mindestens einer Bedruckung (15) versehen wird, wobei die Trägerschicht (11) in der Form bzw. Formhälfte (26, 36), in der sie erzeugt worden ist, mit der mindestens einen Bedruckung (15) versehen wird, **dadurch gekennzeichnet, dass** die mindestens eine Bedruckung (15) der Trägerschicht (11) durch wenigstens einen Digitaldruck erfolgt.

2. Verfahren nach Anspruch 1, **dadurch gekennzeichnet, dass** nach dem Bedrucken auf die sichtbare, freiliegende Seite der mindestens einen Bedruckung (15) eine mindestens teil-transparente Deckschicht (16) aufgespritzt wird.

3. Verfahren nach Anspruch 1 oder 2, **dadurch gekennzeichnet, dass** die mindestens eine Bedruckung (15) der Trägerschicht (11) bei geöffneter Form bzw. Formhälfte (26, 36) vorgenommen wird, vorzugsweise diejenige Seite der in der geöffneten Form bzw. Formhälfte (26, 36) verbleibenden Trägerschicht (11) mit der mindestens einen Bedruckung (15) versehen wird, die bei geöffneter Form in der betreffenden Formenhälfte (26, 36) frei liegt.

4. Verfahren nach einem der Ansprüche 1 bis 3, **dadurch gekennzeichnet, dass** die Trägerschicht (11) mindestens größtenteils in einer Formhälfte (26, 36) spritzgegossen wird, vorzugsweise in einer auswerferseitigen Formhälfte (26, 36).

5. Verfahren nach einem der Ansprüche 1 bis 4, **dadurch gekennzeichnet, dass** die zu bedruckende Seite der gespritzten Trägerschicht (11) mit wenigstens einer Beschichtung bzw. Zwischenschicht, vorzugsweise einer Farbschicht, versehen wird und danach auf die Beschichtung bzw. Farbschicht die mindestens eine Bedruckung (15) im Digitaldruck aufgebracht wird.

6. Verfahren nach einem der Ansprüche 1 bis 5, **dadurch gekennzeichnet, dass** bis nach dem Spritzgießen der Deckschicht (16) die Trägerschicht (15) in derjenigen Formhälfte (26, 36) verbleibt, in der sie gespritzt worden ist und/oder die Form zum Spritzen der Deckschicht (16) mit derjenigen Formhälfte (26, 36) gebildet wird, in der die Trägerschicht (11) gespritzt worden ist.

7. Verfahren nach einem der Ansprüche 1 bis 6, **dadurch gekennzeichnet, dass** erst nach dem erfolgten Spritzen der Deckschicht (16) der vorzugsweise fertig bedruckte Kunststoffgegenstand bei geöffneter Form aus der Formhälfte (26, 36) in der die mindestens einen Trägerschicht (11) gespritzt worden ist und die mindestens eine Bedruckung (15) auf die Trägerschicht (11) aufgebracht worden ist, ausgeworfen wird.

8. Vorrichtung zur Herstellung eines bedruckten Kunststoffgegenstands mit mindestens einer Spritzgussmaschine (18, 19) und wenigstens einer Form zum Spritzgießen mindestens einer Trägerschicht (11) des Gegenstands, einer als eine Digitaldruckeinrichtung (20) ausgebildeten Druckeinrichtung zum Bedrucken des Kunststoffgegenstands, und einer Transfereinrichtung (27, 35), **dadurch gekennzeichnet, dass** die Transfereinrichtung (27, 35) für mindestens eine die Trägerschicht (11) bildende bzw. aufnehmende Formhälfte (26, 36) der Form und/oder die Digitaldruckeinrichtung (20) vorgesehen ist, und die Transfereinrichtung (27, 35) zur Überführung der Formhälfte (26, 36) mit der sich darin noch befindlichen mindestens einen Trägerschicht (11) zur Digitaldruckeinrichtung (20) und zur Rückführung der betreffenden Formhälfte (26, 36) ausgebildet ist.

9. Vorrichtung nach Anspruch 8, **dadurch gekennzeichnet, dass** die Transfereinrichtung (27, 35) Mittel zum Positionieren, Ausrichten und/oder Arretieren der Formhälfte (26, 36) relativ zur Digitaldruckeinrichtung (20) aufweist und/oder die Transfereinrichtung (27, 35) ausgebildet ist, um die die mindestens eine Trägerschicht (11) bildende Formhälfte (26, 36), vorzugsweise die auswerferseitige Formhälfte (26,36), zwischen den Spritzgussmaschinen (18, 19) hin- und herzutransportieren und dabei die Formhälfte (26, 36) zur Digitaldruckeinrichtung (20) zu transportieren und hier zu positionieren und/oder zu arretieren.

10. Vorrichtung nach Anspruch 8 oder 9, **gekennzeichnet durch** zwei Spritzgussmaschinen (18, 19), zwischen denen die Digitaldruckeinrichtung (20) angeordnet ist oder einer Spritzgussmaschine (18, 19) die Digitaleinrichtung (20) zugeordnet ist.

11. Vorrichtung nach einem der Ansprüche 8 bis 10, **dadurch gekennzeichnet, dass** die Formhälfte (26, 36) zur Bildung der mindestens einen Trägerschicht (11), vorzugsweise die auswerferseitige Formhälfte (26, 36), einen Teil der Form jeder Spritzgussmaschine (18, 19) bildet und ein anderer Teil der Form jeder Spritzgussmaschine (18, 19) von einer eigenen Formhälfte (22, 23), vorzugsweise einer eigenen angussseitigen Formhälfte (22, 23), gebildet ist, vorzugsweise eine der jeweiligen Spritzgussmaschine (18, 19) ständig zugeordnete Formhälfte (22, 23) zum Spritzgießen mindestens einer Deckschicht (16) des bedruckten Kunststoffgegenstands ausgebildet ist.

## Claims

1. Method for producing a printed plastic object, an injection-moulded carrier layer (11) being produced by injection moulding and one side of the carrier layer (11) being provided with at least one print (15), the carrier layer (11) being provided with the at least one print (15) in the mould or half mould (26, 36) in which it has been produced, **characterized in that** the at least one print (15) on the carrier layer (11) is carried out by at least one digital printing.

2. Method according to Claim 1, **characterized in that** after the printing, at least one partly transparent covering layer (16) is sprayed onto the visible, exposed side of the at least one print (15).

3. Method according to Claim 1 or 2, **characterized in that** the at least one print (15) of the carrier layer (11) is performed with the mould or half mould (26, 36) open; preferably that side of the carrier layer (11) remaining in the open mould or half mould (26, 36) which is exposed in the relevant half mould (26, 36) when the mould is open is provided with the at least one print (15).

4. Method according to one of Claims 1 to 3, **characterized in that** the carrier layer (11) is at least for the most part injection-moulded in a half mould (26, 36), preferably in a half mould (26, 36) on the ejector side.

5. Method according to one of Claims 1 to 4, **characterized in that** the side of the injection-moulded carrier layer (11) that is to be printed is provided with at least a coating or intermediate layer, preferably a coloured layer and, after that, the at least one print (15) is applied to the coating or coloured layer in the digital printing.

6. Method according to one of Claims 1 to 5, **characterized in that** the carrier layer (15) remains **in that** half mould (26, 36) in which it has been injection-moulded until after the injection-moulding of the covering layer (16), and/or the mould for injection-moulding the covering layer (16) is formed by that half mould (26, 36) in which the carrier layer (11) has been injection-moulded.

7. Method according to one of Claims 1 to 6, **characterized in that** only after the injection-moulding of the covering layer (16) has been carried out and with the mould opened is the preferably finally printed plastic object ejected from the half mould (26, 36) in which the at least one carrier layer (11) has been injection-moulded and the at least one print (15) has been applied to the carrier layer (11).

8. Device for producing a printed plastic object, comprising at least one injection-moulding machine (18, 19) and at least one mould for injection-moulding at least one carrier layer (11) of the object, a printing apparatus formed as a digital printing apparatus (20) for printing the plastic object, and a transfer apparatus (27, 35), **characterized in that** the transfer apparatus (27, 35) is provided for at least one half mould (26, 36) of the mould forming or holding the carrier layer (11) and/or the digital printing apparatus (20), and the transfer apparatus (27, 35) is designed to transfer the half mould (26, 36) with the at least one carrier layer (11) still located therein to the digital printing apparatus (20) and to return the relevant half mould (26, 36).

9. Device according to Claim 8, **characterized in that** the transfer apparatus (27, 35) has means for positioning, aligning and/or stopping the half mould (26, 36) relative to the digital printing apparatus (20), and/or the transfer apparatus (27, 35) is designed to transport the half mould (26, 36) forming the at least one carrier layer (11), preferably the half mould (26, 36) on the ejector side, to and fro between the injection-moulding machines (18, 19) and, in the process, to transport the half mould (26, 36) to the digital printing apparatus (20) and to position and/or to stop it here.

10. Device according to Claim 8 or 9, **characterized by** two injection-moulding machines (18, 19), between which the digital printing apparatus (20) is arranged, or the digital printing apparatus (20) is assigned to one injection-moulding machine (18, 19) .

11. Device according to one of Claims 8 to 10, **characterized in that** the half mould (26, 36) for forming the at least one carrier layer (11), preferably the half mould (26, 36) on the ejector side, forms part of the mould of each injection-moulding machine (18, 19), and another part of the mould of each injection-moulding machine (18, 19) is formed by a dedicated half mould (22, 23), preferably a dedicated half mould (22, 23) on the casting side, preferably a half mould (22, 23) constantly assigned to the respective injection-moulding machine (18, 19) is designed for injection-moulding at least one covering layer (16) of the printed plastic object.

## Revendications

1. Procédé de fabrication d'un objet en plastique imprimé, dans lequel on produit une couche de support projetée (11) par moulage par injection et on munit un côté de la couche de support (11) d'au moins une impression (15), dans lequel on munit la couche de support (11) de ladite au moins une impression (15) dans le moule ou le demi-moule (26, 36) dans lequel elle a été produite, **caractérisé en ce que** l'on exécute ladite au moins une impression (15) de la couche de support (11) par au moins une impression numérique.

2. Procédé selon la revendication 1, **caractérisé en ce qu'**après l'impression on projette une couche de recouvrement au moins partiellement transparente (16) sur le côté libre visible de ladite au moins une impression (15) .

3. Procédé selon la revendication 1 ou 2, **caractérisé en ce que** l'on réalise ladite au moins une impression (15) de la couche de support (11) avec le moule ou le demi-moule ouvert (26, 36), de préférence on munit de ladite au moins une impression (15) le côté de la couche de support (11) restant dans le moule ou le demi-moule ouvert (26, 36), qui est libre dans le demi-moule concerné (26, 36) lorsque le moule est ouvert.

4. Procédé selon l'une quelconque des revendications 1 à 3, **caractérisé en ce que** l'on moule par injection la couche de support (11) au moins en majeure partie dans un demi-moule (26, 36), de préférence dans un demi-moule du côté éjecteur (26, 36).

5. Procédé selon l'une quelconque des revendications 1 à 4, **caractérisé en ce que** l'on munit le côté à imprimer de la couche de support projetée (11) d'au moins un revêtement ou d'une couche intermédiaire, de préférence d'une couche de couleur, et on applique ensuite sur le revêtement ou la couche intermédiaire ou la couche de couleur ladite au moins une impression (15) par impression numérique.

6. Procédé selon l'une quelconque des revendications 1 à 5, **caractérisé en ce que** la couche de support (15) reste jusqu'après le moulage par injection de la couche de recouvrement (16) dans le demi-moule (26, 36), dans lequel elle a été injectée et/ou on forme le moule pour l'injection de la couche de recouvrement (16) avec le demi-moule (26, 36), dans lequel la couche de support (11) a été injectée.

7. Procédé selon l'une quelconque des revendications 1 à 6, **caractérisé en ce que** l'on n'éjecte l'objet en plastique de préférence complètement imprimé avec le moule ouvert hors du demi-moule (26, 36) dans lequel ladite au moins une couche de support (11) a été injectée et ladite au moins une impression (15) a été appliquée sur la couche de support (11), qu'après avoir effectué l'injection de la couche de recouvrement (16).

8. Dispositif de fabrication d'un objet en plastique imprimé avec au moins une machine de moulage par injection (18, 19) et au moins un moule pour le moulage par injection d'au moins une couche de support (11) de l'objet, un dispositif d'impression constitué par un dispositif d'impression numérique (20) pour l'impression de l'objet en plastique, et un dispositif de transfert (27, 35), **caractérisé en ce que** le dispositif de transfert (27, 35) est prévu pour au moins un demi-moule (26, 36) du moule formant ou contenant la couche de support (11) et/ou le dispositif d'impression numérique (20), et le dispositif de transfert (27, 35) est configuré pour le transfert du demi-moule (26, 36) avec ladite au moins une couche de support (11) s'y trouvant encore vers le dispositif d'impression numérique (20) et pour le retour du demi-moule concerné (26, 36).

9. Dispositif selon la revendication 8, **caractérisé en ce que** le dispositif de transfert (27, 35) présente des moyens pour positionner, orienter et/ou arrêter le demi-moule (26, 36) par rapport au dispositif d'impression numérique (20) et/ou le dispositif de transfert (27, 35) est configuré pour transporter le demi-moule (26, 36) formant ladite au moins une couche de support (11), de préférence le demi-moule côté éjecteur (26, 36), de façon réciproque entre les machines de moulage par injection (18, 19) et ainsi transporter le demi-moule (26, 36) vers le dispositif d'impression numérique (20) et l'y positionner et/ou l'y immobiliser.

10. Dispositif selon la revendication 8 ou 9, **caractérisé par** deux machines de moulage par injection (18, 19), entre lesquelles le dispositif d'impression numérique (20) est disposé ou le dispositif d'impression numérique (20) est associé à une machine de moulage par injection (18, 19).

11. Dispositif selon l'une quelconque des revendications 8 à 10, **caractérisé en ce que** le demi-moule (26, 36) pour la formation de ladite au moins une couche de support (11), de préférence le demi-moule côté éjecteur (26, 36), forme une partie du moule de chaque machine de moulage par injection (18, 19) et une autre partie du moule de chaque machine de moulage par injection (18, 19) est formée par un demi-moule spécial (22, 23), de préférence un demi-moule spécial côté amorce de coulée (22, 23), de préférence un demi-moule (22, 23) associé en permanence à la machine de moulage par injection respective (18, 19) pour le moulage par injection d'une couche de recouvrement (16) de l'objet en plastique imprimé.
